# EUROPÄISCHE PATENTANMELDUNG

(11) **EP 2 428 758 A2**
(43) Veröffentlichungstag der Anmeldung: **14.03.2012**
(21) Anmeldenummer: 11007302.0
(22) Anmeldetag: 08.09.2011
(51) Int. Cl.: F28D 9/00, F28F 9/02, F28F 27/02, F24F 12/00

(54) **Plattenwärmetauscher mit Luftverteilblech**

(30) Priorität: 14.09.2010 DE 102010045381
(71) Anmelder: GEA Air Treatment GmbH, 44625 Herne (DE)
(72) Erfinder: Westerdorf, Thomas, 44805 Bochum (DE)
(74) Vertreter: Cohausz Hannig Borkowski Wißgott

(57) **Zusammenfassung**

Die Erfindung betrifft einen Wärmeaustauscher mit Gegenstrom-Plattenwärmetauschem die einen Gegenstrombereich aufweisen, der aufeinander entgegen gesetzten Seiten jeweils einen Luftverteilbereich aufweist, durch die jeder zweite zwischen den Platten befindliche Zwischenraum von Außenluft durchströmt wird, die nach Verlassen des Wärmeaustauschers zur Zuluft wird, und die dazwischen befindlichen Zwischenräume von Abluft durchströmt werden, die zur Fortluft wird, wobei jeder Luftverteilbereich einen Einlassbereich und einen Auslassbereich aufweist, bei denen jeweils nur jeder zweite Zwischenraum geöffnet ist, um die Gegenströme innerhalb des Gegenstrombereichs zu erzeugen, so das ein Luftverteilbereich einen Einlass für die Außenluft und einen Auslass für die Fortluft und der andere Luftverteilbereich einen Einlass für die Abluft und einen Auslass für die Zuluft bildet, und wobei die von den Luftverteilbereichen nicht bedeckten Seitenflächen des Gegenstrombereichs geschlossen sind, wobei
- zwei oder mehr Plattenwärmetauscher derart parallel nebeneinander befestigt sind, dass die Seitenflächen der Plattenwärmetauscher parallel nebeneinander insbesondere aneinander liegen,
- zwischen dem Einlass und Auslass jedes Luftverteilbereichs eine Trennwand angeordnet ist, die die Einlass- und Auslassströmung voneinander trennt, und
- die Plattenwärmetauscher derart nebeneinander angeordnet sind, dass die Räume zwischen den Trennwänden jeweils nur von einer Luftstromart durchströmt sind.

## Beschreibung

Die Erfindung betrifft einen Wärmeaustauscher mit Gegenstrom-Plattenwärmetauschem, die einen Gegenstrombereich aufweisen, der aufeinander entgegen gesetzten Seiten jeweils einen Luftverteilbereich aufweist, durch die jeder zweite zwischen den Platten befindliche Zwischenraum von Außenluft durchströmt wird, die nach Verlassen des Wärmeaustauschers zur Zuluft wird, und die dazwischen befindlichen Zwischenräume von Abluft durchströmt werden, die zur Fortluft wird, wobei jeder Luftverteilbereich einen Einlassbereich und einen Auslassbereich aufweist, bei denen jeweils nur jeder zweite Zwischenraum geöffnet ist, um die Gegenströme innerhalb des Gegenstrombereichs zu erzeugen, so das ein Luftverteilbereich einen Einlass für die Außenluft und einen Auslass für die Fortluft und der andere Luftverteilbereich einen Einlass für die Abluft und einen Auslass für die Zuluft bildet, und wobei die von den Luftverteilbereichen nicht bedeckten Seitenflächen des Gegenstrombereichs geschlossen sind.

Gegenstrom-Plattenwärmetauscher weisen einen Gegenstromteil und zwei Luftverteilbereich auf, in denen die Luftströme auf den Gegenstrombereich gelenkt werden. Hierbei ist die Luftmenge durch die verfügbaren Baugrößen des Wärmetauschers begrenzt. Diese sind durch die Abmessungen Höhe und Breite definiert. Unterschiedliche Luftmengen erfordern unterschiedliche Höhen bzw. Breiten. Eine übliche maximal verfügbare Bauhöhe beträgt 960mm. Die maximale Luftmenge beträgt ca. 4000m³/h pro Meter Breite. Bei Vergrößerung der Bauhöhe vergrößert sich auch die Baulänge und die Länge der Luftverteilbereiche. Dadurch erhöht sich der Druckverlust des Wärmetauschers.

Aufgabe der Entwicklung ist es, einen Wärmetauscher zur Verfügung zu stellen, dessen Aufbau es ermöglicht, auf technisch einfache Weise, unterschiedlich große Geräte zu schaffen. Ferner soll der Wärmetauscher sowohl auf der Zuluft-, als auch auf der Abluftseite im Bypass umfahrbar sein, so dass im Kühlbetrieb kühle Außenluft ohne Vorwärmung in den zu belüftenden Raum eingebracht werden kann. Auch ist es Aufgabe der Erfindung, einen Wärmeaustauscher so zu verbessem, dass kein seitlicher Bypass erforderlich ist und kontinuierlich enteist werden kann, ohne die Leistung übermäßig zu verringern

Diese Aufgaben werden erfindungsgemäß dadurch gelöst,
- dass zwei oder mehr Plattenwärmetauscher derart parallel nebeneinander befestigt sind, dass die Seitenflächen der Plattenwärmetauscher parallel nebeneinander insbesondere aneinander liegen,
- dass zwischen dem Einlass und Auslass jedes Luftverteilbereichs eine Trennwand angeordnet ist, die die Einlass- und Auslassströmung voneinander trennt,
- und dass die Plattenwärmetauscher derart nebeneinander angeordnet sind, dass die Räume zwischen den Trennwänden jeweils nur von einer Luftstromart durchströmt sind.

Damit ist der Wärmetauscher aus mehreren nebeneinander in der Gerätetrennwand stehenden, kleineren Wärmeaustauschern zusammengesetzt. Es ist ein modularer Aufbau gegeben. Mit einer Wärmeaustauschergröße können durch Variation der Anzahl der parallelen Wärmeaustauscher sowie der Anzahl der hintereinander geschalteten Wärmeaustauscher sämtliche Gerätegrößen bestückt werden.

Die Anströmung der Wärmeaustauscher erfolgt im rechten Winkel zur Plattenrichtung. die Aufteilung des Luftstromes auf die einzelnen Wärmeaustauscher erfolgt durch Trennwände als Abschottbleche. Durch diese Abschottbleche werden Kanäle gebildet, deren Stirnflächen wechselseitig verschlossen werden können. Jeder Kanal besitzt so eine geschlossene und eine offene Stimfläche, durch die der Luftstrom einströmt.

Hierbei ist es besonders vorteilhaft, wenn die zwischen den Trennwänden befindlichen Räume Kanäle bilden, die parallel zu den Längskanten der im Querschnitt sechseckförmigen Plattenwärmetauscher verlaufen. Dabei sollten die Trennwände parallel zu den Seitenflächen der Plattenwärmetauscher verlaufen.

Vorzugsweise wird vorgeschlagen, dass die Luftverteilbereiche an der Ober- und Unterseite des Gegenstrombereichs angeordnet sind.

Um ein Vereisen zu verhindern wird vorgeschlagen, dass zwischen dem Außenluftkanal und dem Zuluftkanal ein den Plattenwärmetauscher überbrückender Bypass angeordnet ist.

Besonders sicher und ohne den Betrieb des Wärmetauschers zu behindem wird ein Vereisen verhindert, wenn auf dem Außenluft-Einlassbereich und/oder auf dem Zuluft-Auslassbereich des jeweiligen Luftverteilbereichs ein die Lufteinlassöffnungen bzw. Luftauslassöffnungen abdeckendes Teil derart beweglich angeordnet ist, dass durch das Abdeckteil wahlweise mindestens eine Lufteinlassöffnung bzw. Luftauslassöffnung verschließbar ist. Hierbei kann das Abdeckteil über ein Spindelgetriebe motorisch verstellbar sein. Dies kontinuierliche Abtauung besitzt gegenüber einer über eine sich periodisch öffnende und schließende Bypassklappe arbeitenden Abtauung den Vorteil, dass sich eine konstante Zulufttemperatur einstellt und diese nicht der Periode der Bypassklappe folgend zeitlich schwankt.

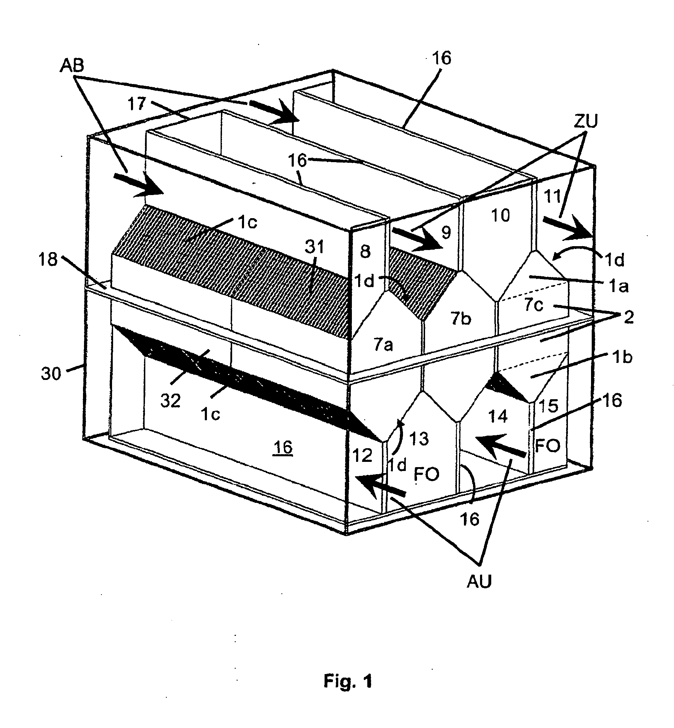

Ein Ausführungsbeispiel der Erfindung ist in den Zeichnungen perspektivisch dargestellt und wird im Folgenden näher beschrieben. Es zeigen
- Figur 1: eine Darstellung des Wärmeaustauschers mit drei Gegenstrom-Plattenwärmetauschem,
- Figur 2: den Bereich zweier aneinander angrenzender Wärmeaustauscher mit beiden Außenluft-Endbereichen, die teilweise durch Abdeckteile motorisch verschließbar sind, um ein Vereisen zu verhindern.

Der Wärmetauscher weist ein Gehäuse 30 auf, in den drei Gegenstrom-Plattenwärmetauscher 7a, 7b, 7c mit ihrer Längserstreckung waagerecht und zueinander parallel angeordnet sind, so dass deren zahlreiche zueinander parallele Platten 31 senkrecht stecken. Hierbei sind die Plattenwärmetauscher 7a, 7b, 7c derart waagerecht nebeneinander befestigt, dass deren senkrechten Seitenflächen 32 aneinander liegen.

Jeder Plattenwärmetauscher 7a, 7b, 7c weist einen Gegenstrombereich 2 auf, an dessen Ober- und Unterseite jeweils ein Luftvereilbereich 1 a, 1 b angeschlossen ist, so dass der gesamte Plattenwärmetauscher einen sechseckigen Querschnitt aufweist und damit auch alle Platten sechseckförmig sind. Hierbei weist jeder Plattenwärmetauscher eine größere Länge als Breite oder Höhe auf.

Beide Luftverteilbereichte 1a, 1 b weisen jeweils einen Einlassbereich 1 c und einen Auslassbereich 1 d auf, wobei bei jedem dieser Bereiche 1 a, 1b jeder zweite Zwischenraum zwischen den Platten geschlossen ist, so dass die Zwischenräume zwischen den Platten 31 abwechselnd in der einen und in der entgegengesetzten Richtung durchströmt sind.

Ein wesentliches technisches Merkmal besteht darin, dass an der Grenze zwischen dem Einlassbereich 1 c und dem Auslassbereich 1 d jedes Gegenstrombereichs 2 außen eine senkrechte Trennwand 16 befestigt ist, so dass oberhalb und unterhalb der Plattenwärmetauscher die Trennwände 16 zwischen sich Räume 8 - 15 als Luftkanäle bilden. Durch diese Anordnung der Räume bzw. Luftkanäle ist jeder Raum/Luftkanal nur mit einer Art von Einlass- oder Auslassbereich 1c, 1 d verbunden. So überbrückt der Raum/Kanal 9 die Auslassbereiche 1d des Plattenwärmetauschers 7a und des Plattenwärmetauschers 7b, so dass die aus beiden Plattenwärmetauschern 7a, 7b austretende erwärmte Außenluft AU in denselben Raum/Kanal 9 eintritt und von dort als Zuluft ZU über nicht dargestellte Verbindungskanäle in den zu belüftenden Raum des Gebäudes geführt wird.

Die neben dem Raum/Kanal 9 liegenden Räume/Kanäle 8 und 10 überdecken die Einlassbereiche 1c vom Plattenwärmetauscher 7a, Plattenwärmetauscher 7b und Plattenwärmetauscher 7c, und führen Abluft AB zu den Einlassbereichen 1c damit diese Abluftströme die Plattenwärmetauscher durchströmen und unten in die Räume/Kanäle 13, 15 gelangen um dort als Fortluft FO über nicht dargestellte Verbindungskanäle ins Freie geführt zu werden.

Ein solches Anordnen der die Außenluft, Abluft, Zuluft und Fortluft führenden Räume, bzw. Kanäle 8 - 15 oberhalb und unterhalb der Luftverteilbereiche 1 a, 1 b vereinfacht und verbessert den Aufbau eines Wärmeaustauschers wesentlich und erlaubt einen modularen Aufbau mit geringeren Außenabmessungen.

An den Enden der Räume/Kanäle 8 -15 befinden sich Abschlusswände 17 und nicht dargestellte Anschlüsse und ferner befindet sich innerhalb des Gehäuses ein Trennboden 18, der das Oberteil vom Unterteil trennt.

Im Ausführungsbeispiel sind Plaftenwärmetauscher 7a, 7b, 7c senkrecht dargestellt mit oberen und unteren Luftverteilern 1 a, 1 b. Stattdessen kann der Wärmetauscher auch um 90 Grad gedreht stehen, so dass die Plattenwärmetauscher übereinander liegen und die Luftverteilbereiche rechts und links von ihnen. Auch sind die Anzahl und die Abmessungen insbesondere die Länge der Plattenwärmetauscher nahezu beliebig.

Bei niedrigen Außentemperaturen kondensiert die in der Abluft enthaltene Luftfeuchte. Bei Außentemperaturen unter 0°C kann dieses Kondensat gefrieren und den Wärmetauscher verstopfen, so dass er seine Funktion nicht mehr erfüllt. Aus diesem Grund wird im Vereisungsfall ein Teil der Außenluft in einem Bypass am Wärmetauscher vorbeigeführt. Die Abkühlung der Abluft wird dadurch reduziert und das Eis wird aufgetaut. Die im Bypass am Wärmetauscher vorbeigeführte Außenluft wird dabei nicht vorgewärmt. Die Erwärmung auf die erforderliche Zulufttemperatur muss in einem nachgeschalteten Erhitzer erfolgen.

Eine kontinuierliche Enteisung wird wie folgt erreicht: Bei einer Außentemperatur von -12°C steigt der Druckverlust im Wärmetauscher innerhalb von 20 Minuten um ca. 25% an. Wird die Außenluft abgeschaltet, erfolgt das Abtauen in kurzer Zeit. Es ist daher ausreichend, nur eine kleine Fläche des Wärmetauschers außenluftseitig zu versperren und diese Versperrung kontinuierlich über die Anstromfläche zu verfahren. Das Abtauen erfolgt dann im Bereich der außenluftseiten Versperrung. Dies kann über ein- oder mehrere kontinuierlich verfahrbare Abschottbleche erfolgen, die z.B. über einen Riemenschlitten geführt werden. Der Wärmetauscher wird hierbei nur gering versperrt, was zu keiner merklichen Leistungseinbuße führt.

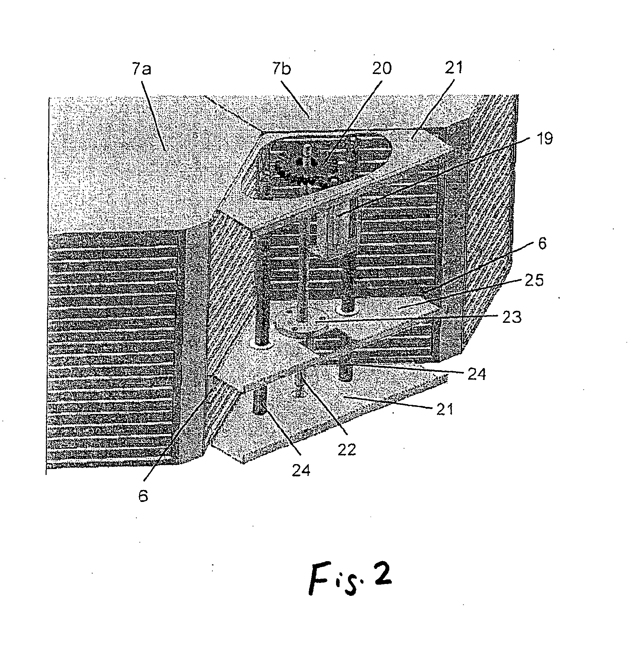

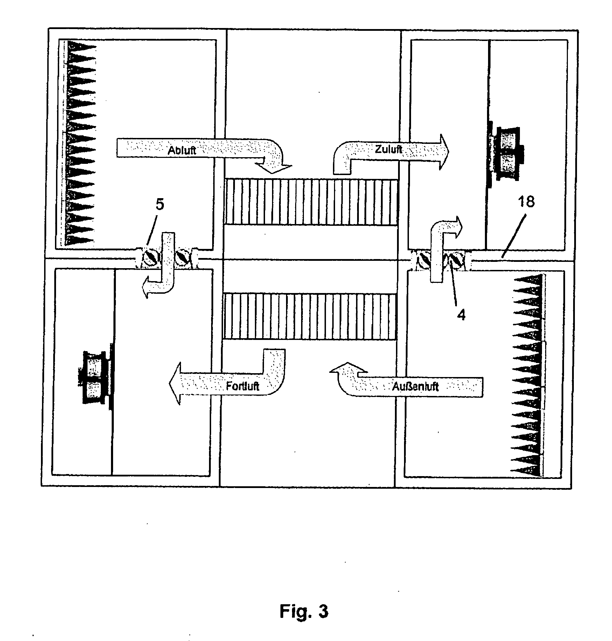

Figur 2 zeigt eine Ausführung einer derartigen kontinuierlichen Enteisung, die zwei parallele Wärmetauscher 7a und 7b beinhaltet. Die komplette Mechanik befindet sich zwischen zwei Halteblechen 21, bzw. wird von diesen getragen. Eine Spindel 22 wird von einem drehrichtungsumschaltbaren Motor 19 über ein Getriebe 20 angetrieben. Die Drehbewegung der Spindel 22 wird über eine Spindelmutter 23 in eine Linearbewegung des Haltbleches 25 umgesetzt. Die Abschottbleche 6 werden so kontinuierlich über die Einströmquerschnitte der Wärmetauscher bewegt. die Drehrichtung des Antriebsmotors wird umgeschaltet, wenn das Abschottblech 6 den Randbereich des Wärmetauschers erreicht. Die Einrichtung kann optional mit zusätzlichen Führungselementen 24 ausgerüstet sein.

Der Vereisungsschutzbypass 4 wird in die Gerätetrennwand 18 eingebaut und verkleinert nicht die wirksame Wärmetauschbreite. Dieser Bypass wird auch dazu benutzt, den Wärmetauscher im Kühlfall zu umfahren, so dass kühlere Außenluft ohne Vorwärmung in den zu belüftenden Raum eingebracht werden kann.

Eine weitere Bypassklappe 5 auf der Abluftseite ermöglicht es, den Wärmeaustauscher auch abluftseitig zu umfahren und so die Druckverluste des Gerätes zu reduzieren.

## Patentansprüche

1. Wärmeaustauscher mit Gegenstrom-Plattenwärmetauschem (7a, 7b, 7c), die einen Gegenstrombereich (2) aufweisen, der aufeinander entgegen gesetzten Seiten jeweils einen Luftverteilbereich (1a, 1b) aufweist, durch die jeder zweite zwischen den Platten (31) befindliche Zwischenraum von Außenluft (AU) durchströmt wird, die nach Verlassen des Wärmeaustauschers zur Zuluft (ZU) wird, und die dazwischen befindlichen Zwischenräume von Abluft (AB) durchströmt werden, die zur Fortluft (FO) wird, wobei jeder Luftverteilbereich (1 a, 1 b) einen Einlassbereich (1 c) und einen Auslassbereich (1 d) aufweist, bei denen jeweils nur jeder zweite Zwischenraum geöffnet ist, um die Gegenströme Innerhalb des Gegenstrombereichs zu erzeugen, so das ein Luftverteilbereich (1a) einen Einlass für die Außenluft (AU) und einen Auslass für die Fortluft (FO) und der andere Luftverteilbereich (1b) einen Einlass für die Abluft (AB) und einen Auslass für die Zuluft (ZU) bildet, und wobei die von den Luftverteilbereichen (1a, 1b) nicht bedeckten Seitenflächen (32) des Gegenstrombereichs (2) geschlossensind,**dadurch gekennzeichnet,**
- **dass** zwei oder mehr Plattenwärmetauscher (7a, 7b, 7c) derart parallel nebeneinander befestigt sind, dass die Seitenflächen (32) der Plattenwärmetauscher parallel nebeneinander insbesondere aneinander liegen,
- **dass** zwischen dem Einlass und Auslass jedes Luftverteilbereichs (1a, 1 b) eine Trennwand (16) angeordnet ist, die die Einlass- und Auslassströmung voneinander trennt, und
- **dass** die Plattenwärmetauscher (7a, 7b, 7c) derart nebeneinander angeordnet sind, dass die Räume (8 bis 15) zwischen den Trennwänden (16) jeweils nur von einer Luftstromart (AU, ZU, AB, FO) durchströmt sind.

2. Wärmeaustauscher nach Anspruch 1, **dadurch gekennzeichnet, dass** die zwischen den Trennwänden (16) befindlichen Räume (8 bis 15) Kanäle bilden, die parallel zu den Längskanten der Plattenwärmetauscher (7a, 7b, 7c) verlaufen.

3. Wärmeaustauscher nach Anspruch 1 oder 2, **dadurch gekennzeichnet, dass** die Trennwände (16) parallel zu den Seitenflächen (32) der Plattenwärmetauscher verlaufen.

4. Wärmeaustauscher nach einem der vorherigen Ansprüche, **dadurch gekennzeichnet, dass** zwischen dem Außenluftkanal und dem Zuluftkanal und/oder zwischen dem Abluftkanal und dem Fortluftkanal ein den Plattenwärmetauscher (7a, 7b, 7c) überbrückender Bypass angeordnet ist.

5. Wärmeaustauscher nach einem der vorherigen Ansprüche, **dadurch gekennzeichnet, dass** die Luftverteilbereiche (1a, 1 b) an der Ober-und Unterseite des Gegenstrombereichs (2) angeordnet sind.

6. Wärmeaustauscher nach einem der vorherigen Ansprüche, **dadurch gekennzeichnet, dass** auf dem Außenluft-Einlassbereich und/oder auf dem Zuluft-Auslassbereich des jeweiligen Luftverteilbereichs (1a, 1 b) ein die Lufteinlassöffnungen bzw. Luftauslassöffnungen abdeckendes Teil (6) derart beweglich angeordnet ist, dass durch das Abdeckteil wahlweise mindestens eine Lufteinlassöffnung bzw. Luftauslassöffnung verschließbar ist.

7. Wärmeaustauscher nach Anspruch 6, **dadurch gekennzeichnet, dass** das Abdeckteil (6) über ein Spindelgetriebe (20, 22) motorisch verstellbar ist.

8. Wärmetauscher nach einem der vorherigen Ansprüche, **dadurch gekennzeichnet, dass** die Plattenwärmetauscher (7a, 7b, 7c) im Querschnitt sechseckförmig sind.
